# EUROPEAN PATENT APPLICATION

(11) **EP 4 564 965 A1**
(43) Date of publication of application: **04.06.2025**
(21) Application number: 23851640.5
(22) Date of filing: 31.07.2023
(51) Int. Cl.: H04W 72/04

(54) **COMMUNICATION METHOD AND COMMUNICATION APPARATUS BASED ON TRIGGERED TRANSMISSION OPPORTUNITY SHARING MECHANISM**

(30) Priority: 08.08.2022 CN 202210946098
(71) Applicant: Huawei Technologies Co., Ltd., Shenzhen, Guangdong 518129 (CN)
(72) Inventor: YANG, Mao, Xi'an, Shaanxi 710072 (CN); YAN, Zhongjiang, Xi'an, Shaanxi 710072 (CN); LI, Yunbo, Shenzhen, Guangdong 518129 (CN)
(74) Representative: Gill Jennings & Every LLP
(86) International application number: PCT/CN2023/110411
(87) International publication number: WO 2024/032419

(57) **Abstract**

This application discloses a triggered transmission opportunity sharing mechanism-based communication method and a communication apparatus. This application is applied to a wireless local area network system that supports 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8 or Wi-Fi AI, and may be further applied to a UWB-based wireless personal area network system and a sensing (sensing) system. The method includes: receiving a first frame from an access point; and after replying with a second frame for the first frame, ignoring, within a first time period, a NAV set by the access point, until any one of the following conditions occurs: a transmission failure occurs on a station; a station does not send a PPDU within a PIFS since a third frame is sent; or a station does not send a PPDU within a PIFS since an immediate response from the access point is received. This can reduce interference.

## Description

This application claims priority to Chinese Patent Application No. 202210946098.4, filed with the China National Intellectual Property Administration on August 8, 2022 and entitled "TRIGGERED TRANSMISSION OPPORTUNITY SHARING MECHANISM-BASED COMMUNICATION METHOD AND COMMUNICATION APPARATUS", which is incorporated herein by reference in its entirety.

### TECHNICAL FIELD

This application relates to the communication field, and in particular, to a triggered transmission opportunity sharing mechanism-based communication method and a communication apparatus.

### BACKGROUND

A Wi-Fi system (namely, a system supporting the IEEE 802.11 standard) is deployed on an unlicensed spectrum, and a plurality of stations use a channel resource through contention. For example, in a common enhanced distributed channel access (enhanced distributed channel access, EDCA) contention mechanism, a station sends a first frame after completing channel backoff. If the first frame has a response frame, after the station successfully receives the response frame, it indicates that channel contention succeeds. Otherwise, the station needs to perform backoff again. If the first frame does not require a response frame, after the station sends the first frame, it indicates that channel contention succeeds. After channel contention succeeds, the station may reserve a time period for data transmission, and the time period is referred to as a transmission opportunity (transmission opportunity, TXOP). The station that successfully reserves the TXOP is referred to as a TXOP holder. Within the TXOP, only the TXOP holder can actively send data, and another station can only receive data or send a corresponding response frame.

In the IEEE 802.11be standard, a TXOP mechanism is extended. To be specific, an AP serving as a TXOP holder may allocate a part of a time resource within a reserved TXOP to a station (non-AP STA) via an MU-RTS TXS trigger frame. The mechanism is currently referred to as triggered transmission opportunity sharing (triggered TXOP sharing). The triggered transmission opportunity sharing mechanism specifically has two allocation modes. In a first allocation mode (mode 1), a station may send uplink data to an AP within an allocated time. In a second allocation mode (mode 2), a station may perform peer-to-peer (peer-to-peer, P2P) transmission with another station or send uplink data to an AP within an allocated time. This mechanism can be used to reduce collision caused by channel contention between stations, and improve system efficiency. Currently, an existing triggered transmission opportunity sharing mechanism-based communication solution has a problem that a station may interfere with sending of an AP. Therefore, a triggered transmission opportunity sharing mechanism-based communication solution that can avoid interference to sending of the AP needs to be studied.

### SUMMARY

Embodiments of this application disclose a triggered transmission opportunity sharing mechanism-based communication method and a communication apparatus, to avoid interference to sending of an AP.

According to a first aspect, an embodiment of this application provides a triggered transmission opportunity sharing mechanism-based communication method. The method is applied to a station, and the method includes: receiving a first frame from an access point (access point, AP), where the first frame indicates that the access point allocates a first time period to the station; and after replying with a second frame for the first frame, ignoring, within the first time period, a network allocation vector (network allocation vector, NAV) set by the access point, until any one of the following conditions occurs: A value of a TXOP sharing mode in the first frame is equal to 1, and a transmission failure occurs on the station; a value of a transmission opportunity (transmission opportunity, TXOP) sharing mode in the first frame is equal to 1, and the station does not send a physical layer protocol data unit (PHY protocol data unit, PPDU) within a point coordination function interframe space (PCF interframe space, PIFS) since a third frame is sent, where the third frame does not require an immediate response from the access point; or a value of a TXOP sharing mode in the first frame is equal to 1, and the station does not send a PPDU within a PIFS since an immediate response from the access point is received. Optionally, the first frame is an MU-RTS TXS trigger frame (or referred to as an MU-RTS TXS frame). Optionally, the second frame is a clear to send (clear to send, CTS) frame. The NAV set by the access point may include an intra (intra) basic service set (basic service set, BSS) NAV and/or a basic (basic) NAV of the station. Specifically, when the station is associated with the access point, the NAV is the intra basic service set NAV. Otherwise, the NAV is the basic NAV. The NAV set by the access point may be understood as a NAV set by the access point for the station. A PCF is a point coordination function (point coordination function).

Alternatively, the method in the first aspect may be replaced with: receiving the first frame from the access point, where the first frame indicates that the access point allocates the first time period to the station; and after the NAV set by the access point is ignored within the first time period based on the first frame, and after a first condition occurs within the first time period, determining, when a NAV value is equal to 0, that virtual carrier sense is idle, or determining, when a NAV value is not equal to 0, that virtual carrier sense is busy, where the first condition includes any one of the following: The value of the TXOP sharing mode in the first frame is equal to 1, and the transmission failure occurs on the station; the value of the TXOP sharing mode in the first frame is equal to 1, and the station does not send the PPDU within the point coordination function interframe space (PIFS) since the third frame is sent, where the third frame does not require the immediate response from the access point; or the value of the TXOP sharing mode in the first frame is equal to 1, and the station does not send the PPDU within the PIFS since the immediate response from the access point is received. In this embodiment of this application, that no PPDU is sent may be considered as that no PPDU transmission is initiated. Determining, when a NAV value is equal to 0, that virtual carrier sense is idle may be replaced with determining, when both the NAV (intra BSS NAV) value and a basic (basic) NAV value are equal to 0, that virtual carrier sense is idle.

Alternatively, the method in the first aspect may be replaced with that, after the station (station, STA) sends the CTS for the MU-RTS TXS trigger frame (corresponding to the first frame) from the AP, the STA needs to ignore, within the time period allocated via the MU-RTS TXS trigger frame, the NAV set by the AP for the STA, until any one of the following conditions occurs: The value of the TXOP sharing mode in the MU-RTS TXS trigger frame is equal to 1, and the STA does not initiate any PPDU transmission within the PIFS since the immediate response from the AP is received; the value of the TXOP sharing mode in the MU-RTS TXS trigger frame is equal to 1, and the STA does not initiate any PPDU transmission within a PIFS since a frame that does not require an immediate response is sent; or the value of the TXOP sharing mode in the MU-RTS TXS trigger frame is equal to 1, and the transmission failure occurs on the STA. The corresponding translation in English may be as follows: After sending the CTS solicited by MU-RTS TXS from the associated AP, the STA that sends the responding CTS shall ignore the NAV that is set by the AP within the time allocation signaled in the MU-RTS TXS Trigger frame until any of the conditions occurs: the STA does not initiate any PPDU transmission within the PIFS after receiving an immediate response from the associated AP if the TXOP Sharing Mode subfield value equals to 1; the STA does not initiate any PPDU transmission within the PIFS after sending a frame that does not require an immediate response if the TXOP Sharing Mode subfield value equals to 1; transmission failure happens if the TXOP Sharing Mode subfield values equal to 1.

In this embodiment of this application, after the first frame is replied to with the second frame, the NAV set by the access point is ignored within the first time period until any one of the foregoing conditions occurs. This can avoid interference to sending of the AP.

In a possible implementation, that the value of the TXOP sharing mode in the first frame is equal to 1 indicates that the station is allowed to only perform frame transmission with the associated AP (namely, the access point) within the allocated time. The associated AP is an access point associated with the station, that is, the access point that sends the first frame to the station. "The value of the TXOP sharing mode in the first frame is equal to 1" mentioned in the foregoing description may be equivalently replaced with "the TXOP sharing mode in the first frame is that the station is allowed to only perform frame transmission with the associated AP within the allocated time".

According to a second aspect, an embodiment of this application provides a triggered transmission opportunity sharing mechanism-based communication method. The method is applied to a station, and the method includes: receiving a first frame from an access point, where the first frame indicates that the access point allocates a first time period to the station; and after replying with a second frame for the first frame, ignoring a NAV set by the access point, until any one of the following conditions occurs: The first time period ends; a value of a TXOP sharing mode in the first frame is equal to 1, and a transmission failure occurs on the station; a value of a TXOP sharing mode in the first frame is equal to 1, and the station does not send a PPDU within a PIFS since a third frame is sent, where the third frame does not require an immediate response from the access point; or a value of a TXOP sharing mode in the first frame is equal to 1, and the station does not send a PPDU within a PIFS since an immediate response from the access point is received.

Alternatively, the method in the second aspect may be replaced with: receiving the first frame from the access point, where the first frame indicates that the access point allocates the first time period to the station; and after that the NAV set by the access point is ignored is determined based on the first frame, and after a first condition occurs, determining, when a NAV value is equal to 0, that virtual carrier sense is idle, or determining, when a NAV value is not equal to 0, that virtual carrier sense is busy, where the first condition includes any one of the following: The first time period ends; the value of the TXOP sharing mode in the first frame is equal to 1, and the transmission failure occurs on the station; the value of the TXOP sharing mode in the first frame is equal to 1, and the station does not send the PPDU within the PIFS since the third frame is sent, where the third frame does not require the immediate response from the access point; or the value of the TXOP sharing mode in the first frame is equal to 1, and the station does not send the PPDU within the PIFS since the immediate response from the access point is received.

Alternatively, the method in the second aspect may be replaced with that, after the station sends the CTS for the MU-RTS TXS trigger frame from the AP, the STA ignores the NAV set by the AP for the STA, until any one of the following conditions occurs: A time allocation signal in the MU-RTS TXS trigger frame ends; the value of the TXOP sharing mode in the MU-RTS TXS trigger frame is equal to 1, and the STA does not initiate any PPDU transmission within the PIFS since the immediate response from the AP is received; the value of the TXOP sharing mode in the MU-RTS TXS trigger frame is equal to 1, and the STA does not initiate any PPDU transmission within a PIFS since a frame that does not require an immediate response is sent; or the value of the TXOP sharing mode in the MU-RTS TXS trigger frame is equal to 1, and the transmission failure occurs on the STA. The corresponding translation in English may be as follows: After sending the CTS solicited by MU-RTS TXS from the associated AP, the STA that sends the responding CTS shall ignore the NAV that is set by the AP until any of the conditions occurs: the time allocation signaled in the MU-RTS TXS Trigger frame ends; the STA does not initiate any PPDU transmission within the PIFS after receiving an immediate response from the associated AP if the TXOP Sharing Mode subfield value equals to 1; the STA does not initiate any PPDU transmission within the PIFS after sending a frame that does not require an immediate response if the TXOP Sharing Mode subfield value equals to 1; transmission failure happens if the TXOP Sharing Mode subfield values equal to 1.

In this embodiment of this application, after the first frame is replied to with the second frame, the NAV set by the access point is ignored until any one of the foregoingconditions occurs. This can avoid interference to sending of the AP.

In a possible implementation, that the value of the TXOP sharing mode in the first frame is equal to 1 indicates that the station is allowed to only perform frame transmission with the associated AP within the allocated time. "The value of the TXOP sharing mode in the first frame is equal to 1" mentioned in the foregoing description may be equivalently replaced with "the TXOP sharing mode in the first frame is that the station is allowed to only perform frame transmission with the associated AP within the allocated time".

According to a third aspect, an embodiment of this application provides another triggered transmission opportunity sharing mechanism-based communication method. The method is applied to a station, and the method includes: receiving a first frame from an access point, where the first frame indicates that the access point allocates a first time period to the station; and after replying with a second frame for the first frame, ignoring, within the first time period, a NAV set by the access point, and skipping initiating channel contention within the first time period.

In this embodiment of this application, after the first frame is replied to with the second frame, the NAV set by the access point is ignored within the first time period, and channel contention is not initiated within the first time period. This can reduce or avoid interference to sending of the AP.

In a possible implementation, a first field in the first frame indicates that the station is allowed to only perform frame transmission with the associated AP within the allocated time.

In a possible implementation, the first field is a TXOP sharing mode subfield, and a value of the first field is equal to 1. "The first field is the TXOP sharing mode subfield, and the value of the first field is equal to 1" mentioned in the foregoing description may be equivalently replaced with "the TXOP sharing mode in the first frame is that the station is allowed to only perform frame transmission with the associated AP within the allocated time".

In this implementation, the first field is the TXOP sharing mode subfield, and the value of the first field is equal to 1, so that whether to skip initiating channel contention within the first time period is determined based on the first field.

The method in the third aspect may be replaced with that, after the station sends the CTS frame for the MU-RTS TXS trigger frame from the AP, the station ignores, within the time period allocated via the MU-RTS TXS trigger frame, the NAV set by the AP for the station; and if the value of the TXOP sharing mode subfield in the MU-RTS TXS trigger frame is 1, the station does not initiate channel contention within the time period allocated via the MU-RTS TXS trigger frame. The corresponding translation in English may be as follows: After sending the CTS solicited by MU-RTS TXS from the associated AP, the STA that sends the responding CTS shall ignore the NAV that is set by the AP within the time allocation signaled in the MU-RTS TXS Trigger frame. The STA shall not initiate channel contention within the time allocation signaled in the MU-RTS TXS Trigger frame if the TXOP Sharing Mode subfield value equals to 1.

According to a fourth aspect, an embodiment of this application provides a communication apparatus. The communication apparatus has a function of implementing behavior in the method embodiment in the first aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first frame from an access point (access point, AP), where the first frame indicates that the access point allocates a first time period to the station. The transceiver module is further configured to reply with a second frame for the first frame. The processing module is configured to: after the first frame is replied to with the second frame, ignore, within the first time period, a NAV set by the access point, until any one of the following conditions occurs: A value of a TXOP sharing mode in the first frame is equal to 1, and a transmission failure occurs on the station; a value of a TXOP sharing mode in the first frame is equal to 1, and the station does not send a PPDU within a PIFS since a third frame is sent, where the third frame does not require an immediate response from the access point; or a value of a TXOP sharing mode in the first frame is equal to 1, and the station does not send a PPDU within a PIFS since an immediate response from the access point is received.

For possible implementations of the communication apparatus in the fourth aspect, refer to the possible implementations of the first aspect.

For technical effect achieved by the possible implementations of the fourth aspect, refer to descriptions of technical effect of the first aspect or the possible implementations of the first aspect.

According to a fifth aspect, an embodiment of this application provides another communication apparatus. The communication apparatus has a function of implementing behavior in the method embodiment in the second aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first frame from an access point, where the first frame indicates that the access point allocates a first time period to the station. The transceiver module is further configured to reply with a second frame for the first frame. The processing module is configured to: after the first frame is replied to with the second frame, ignore a NAV set by the access point, until any one of the following conditions occurs: The first time period ends; a value of a TXOP sharing mode in the first frame is equal to 1, and a transmission failure occurs on the station; a value of a TXOP sharing mode in the first frame is equal to 1, and the station does not send a PPDU within a PIFS since a third frame is sent, where the third frame does not require an immediate response from the access point; or a value of a TXOP sharing mode in the first frame is equal to 1, and the station does not send a PPDU within a PIFS since an immediate response from the access point is received.

For possible implementations of the communication apparatus in the fifth aspect, refer to the possible implementations of the second aspect.

For technical effect achieved by the possible implementations of the fifth aspect, refer to descriptions of technical effect of the second aspect or the possible implementations of the second aspect.

According to a sixth aspect, an embodiment of this application provides another communication apparatus. The communication apparatus has a function of implementing behavior in the method embodiment in the third aspect. The communication apparatus may be a communication device, or may be a component (for example, a processor, a chip, or a chip system) of the communication device, or may be a logical module or software that can implement all or some of functions of the communication device. The function of the communication apparatus may be implemented by hardware, or may be implemented by hardware executing corresponding software. The hardware or the software includes one or more modules or units corresponding to the foregoing function. **In** a possible implementation, the communication apparatus includes a transceiver module and a processing module. The transceiver module is configured to receive a first frame from an access point, where the first frame indicates that the access point allocates a first time period to the station. The processing module is configured to: when a first field in the first frame indicates that the station is not allowed to perform peer-to-peer transmission within the allocated time, determine not to initiate channel contention within the first time period.

**In** a possible implementation, the first field is a TXOP sharing mode subfield, and a value of the first field is equal to 1.

For possible implementations of the communication apparatus in the sixth aspect, refer to the possible implementations of the third aspect.

For technical effect achieved by the possible implementations of the sixth aspect, refer to descriptions of technical effect of the third aspect or the possible implementations of the third aspect.

According to a seventh aspect, an embodiment of this application provides another communication apparatus. The communication apparatus includes a processor. The processor is coupled to a memory. The memory is configured to store a program or instructions. When the program or the instructions are executed by the processor, the communication apparatus is enabled to perform the method according to any one of the first aspect or the possible implementations of the first aspect, or the communication apparatus is enabled to perform the method according to any one of the second aspect or the possible implementations of the second aspect, or the communication apparatus is enabled to perform the method according to any one of the third aspect or the possible implementations of the third aspect.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information into the processor. Further, after the transceiver receives the information, other processing may need to be performed on the information before the information is input into the processor.

Operations such as sending and/or receiving related to the processor may be generally understood as outputting based on instructions of the processor, unless otherwise specified, or provided that the operations do not conflict with actual functions or internal logic of the operations in related descriptions.

In an implementation process, the processor may be a processor specially configured to perform these methods, or may be a processor, for example, a general-purpose processor, that executes computer instructions in the memory to perform these methods. For example, the processor may be further configured to execute a program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located in the communication apparatus.

In a possible implementation, the processor and the memory may alternatively be integrated into one device, that is, the processor and the memory may alternatively be integrated together.

In a possible implementation, the communication apparatus further includes the transceiver. The transceiver is configured to receive a signal, send a signal, or the like.

According to an eighth aspect, this application provides another communication apparatus. The communication apparatus includes a processing circuit and an interface circuit. The interface circuit is configured to obtain data or output data. The processing circuit is configured to perform the method according to any one of the first aspect or the possible implementations of the first aspect, or perform the method according to any one of the second aspect or the possible implementations of the second aspect, or perform the method according to any one of the third aspect or the possible implementations of the third aspect.

According to a ninth aspect, this application provides a computer-readable storage medium. The computer-readable storage medium stores a computer program. The computer program includes program instructions. When the program instructions are executed, a computer is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect.

According to a tenth aspect, this application provides a computer program product. The computer program product includes a computer program. The computer program includes program instructions. When the program instructions are executed, a computer is enabled to perform the method according to any one of the first aspect or the possible implementations of the first aspect, or perform the method according to any one of the second aspect or the possible implementations of the second aspect, or perform the method according to any one of the third aspect or the possible implementations of the third aspect.

According to an eleventh aspect, this application provides a communication system, including the station and the access point according to any one of the fourth aspect or the possible implementations of the fourth aspect. Alternatively, the communication system includes the station and the access point according to any one of the fifth aspect or the possible implementations of the fifth aspect. Alternatively, the communication system includes the station and the access point according to any one of the sixth aspect or the possible implementations of the sixth aspect.

According to a twelfth aspect, this application provides a chip, including a processor and a communication interface. The processor reads, through the communication interface, instructions stored in a memory, to perform the method according to any one of the first aspect or the possible implementations of the first aspect, or perform the method according to any one of the second aspect or the possible implementations of the second aspect, or perform the method according to any one of the third aspect or the possible implementations of the third aspect.

### BRIEF DESCRIPTION OF DRAWINGS

To describe technical solutions in embodiments of this application or in the background more clearly, the following briefly describes accompanying drawings for describing embodiments of this application or the background.
FIG. 1 shows a WLAN communication system as an example of a wireless communication system applicable to a technical solution according to this application;
FIG. 2 shows a process in which an AP allocates a part of a time resource within a reserved TXOP to a STA 1 via an MU-RTS TXS trigger frame;
FIG. 3 is an interaction flowchart of a triggered transmission opportunity sharing mechanism-based communication method according to an embodiment of this application;
FIG. 4 is an interaction flowchart of another triggered transmission opportunity sharing mechanism-based communication method according to an embodiment of this application;
FIG. 5 is an interaction flowchart of another triggered transmission opportunity sharing mechanism-based communication method according to an embodiment of this application;
FIG. 6 is an interaction flowchart of another triggered transmission opportunity sharing mechanism-based communication method according to an embodiment of this application;
FIG. 7 is an interaction flowchart of another triggered transmission opportunity sharing mechanism-based communication method according to an embodiment of this application;
FIG. 8 is an interaction flowchart of another triggered transmission opportunity sharing mechanism-based communication method according to an embodiment of this application;
FIG. 9 is a diagram of a structure of a communication apparatus 900 according to an embodiment of this application;
FIG. 10 is a diagram of a structure of another communication apparatus 100 according to an embodiment of this application; and
FIG. 11 is a diagram of a structure of another communication apparatus 110 according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device.

"Embodiments" mentioned in this specification mean that specific features, structures, or characteristics described in combination with embodiments may be included in at least one embodiment of this application. The phrase shown at various locations in the specification may not necessarily mean a same embodiment, and is not an independent or alternative embodiment exclusive from another embodiment. It may be understood explicitly and implicitly by a person skilled in the art that embodiments described in this specification may be combined with another embodiment.

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should also be understood that determining (or generating) B based on (or based on) A does not mean that B is determined (or generated) based on (or based on) A only, and B may alternatively be determined (or generated) based on (or based on) A and/or other information.

The following first describes terms and technical solutions in embodiments of this application.

### 1. Access point and station

Embodiments of this application are mainly described by using an example in which a WLAN network is deployed, especially a network to which the IEEE 802.11 system standard is applied. A person skilled in the art easily understands that various aspects of this application may be extended to other networks using various standards or protocols, for example, Bluetooth (Bluetooth), a high-performance radio LAN (high performance radio LAN, HIPERLAN) (which is a wireless standard similar to the IEEE 802.11 standard, and is mainly used in Europe), and a wide area network (WAN), a personal area network (personal area network, PAN), or another network that is known currently or developed in future. Therefore, regardless of used coverage and a used wireless access protocol, various aspects provided in this application are applicable to any appropriate wireless network.

Embodiments of this application are further applicable to a wireless local area network system, like an internet of things (internet of things, IoT) or a vehicle-to-everything (Vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems to which this application is applicable are merely examples for descriptions, and the communication systems to which this application is applicable are not limited thereto. This is uniformly described herein, and details are not described below again.

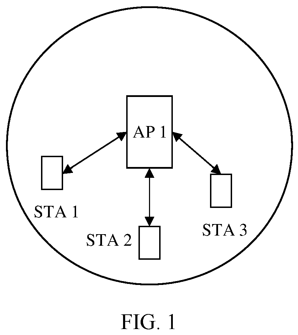

FIG. 1 shows a WLAN communication system as an example of a wireless communication system applicable to a technical solution according to this application. The communication system includes an AP (only an AP 1 is shown) and one or more STAs (only a STA 1, a STA 2, and a STA 3 are shown). Both the access point and the STA support a WLAN protocol. The WLAN protocol may include IEEE 802.11be (or referred to as Wi-Fi 7 or the EHT protocol), and may further include protocols such as IEEE 802.11ax and IEEE 802.11ac. Certainly, with continuous evolution and development of communication technologies, the WLAN protocol may further include a next-generation protocol of IEEE 802.11be, or the like. A WLAN is used as an example. An apparatus for implementing a method in this application may be an access point or a STA in the WLAN, or a chip or a processing system installed in the access point or the STA. As shown in FIG. 1, the STA 1 and the STA 2 in a basic service set may perform channel contention, to preempt a channel resource.

The access point is an apparatus having a wireless communication function, supports communication according to the WLAN protocol, and has a function of communicating with another device (for example, a station or another access point) in the WLAN network. Certainly, the access point may further have a function of communicating with another device. A WLAN system includes one or more AP stations and one or more non-access point stations (non-access point stations, non-AP STAs). For ease of description, in this specification, an access point station is referred to as an access point (AP), and a non-access point station is referred to as a station (STA).

The access point may be an entire device, or may be a chip, a processing system, or the like installed in the entire device. The device in which the chip or the processing system is installed may implement a method and a function in embodiments of this application under control of the chip or the processing system (that is, the AP). The AP in embodiments of this application is an apparatus that provides a service for a station (Station, STA), and may support 802.11 series protocols, for example, 802.11ac, 802.11n, 802.11g, 802.11b, 802.11a, 802.11be, Wi-Fi 8, or a next generation thereof. For example, the AP may be a communication entity such as a communication server, a router, a switch, or a bridge. The AP may include a macro base station, a micro base station (also referred to as a small cell), a pico base station, a femto base station, a relay station, an access point, a gNB, a transmission and reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in devices in various forms, to implement the method and the function in embodiments of this application.

The station is an apparatus having a wireless communication function, supports communication according to the WLAN protocol, and has a capability of communicating with another station or access point in the WLAN network. For example, the STAis any communication apparatus that allows a user to communicate with the AP and further communicate with the WLAN. The communication apparatus may be an entire device, or may be a chip, a processing system, or the like installed in the entire device. The device in which the chip or the processing system is installed may implement a method and a function in embodiments of this application under control of the chip or the processing system (that is, the station). The STA may include a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The station may include various handheld devices, vehicle-mounted devices, wearable devices, or computing devices that have a wireless communication function, or other processing devices connected to a wireless modem. Optionally, the station may be a handheld device (handset), a vehicle-mounted device, a wearable device, a terminal in the internet of things or a vehicle-to-everything network, a terminal in any form in 5G and a communication system evolved after 5G, or the like that has a wireless communication function. This is not limited in this application. The station may support 802.11 series protocols, for example, a plurality of WLAN standards such as 802.11ac, 802.11n, 802.11g, 802.11b, 802.11a, 802.11be, Wi-Fi 8, or a next generation thereof.

### 2. Triggered transmission opportunity sharing (triggered TXOP sharing) mechanism

In the IEEE 802.11be standard, a TXOP mechanism is extended. To be specific, an AP serving as a TXOP holder may allocate a part of a time resource (a first time period in FIG. 1 below) within a reserved TXOP to a station (subsequently represented by a first station) via an MU-RTS TXS trigger frame, and the mechanism is currently referred to as triggered transmission opportunity sharing (Triggered TXOP sharing). The first station is any station associated with the AP serving as the TXOP holder. The triggered transmission opportunity sharing mechanism specifically has two allocation modes. In a first allocation mode (mode 1), the first station may send uplink data to the AP within an allocated time. In a second allocation mode (mode 2), the first station may perform P2P transmission with a second station or send uplink data to the AP within the allocated time. A TXOP sharing mode subfield (TXOP sharing Mode subfield) in the MU-RTS TXS trigger frame indicates an allocation mode. For example, if a value of the TXOP sharing mode subfield in the MU-RTS TXS trigger frame is equal to 1, the first station is allowed to only perform frame transmission with the associated AP within the allocated time; or if a value of the TXOP sharing mode subfield in the MU-RTS TXS trigger frame is equal to 2, the first station is allowed to perform frame transmission with the associated AP and perform P2P transmission with the second station within the allocated time. It should be understood that, when the value of the TXOP sharing mode subfield in the MU-RTS TXS trigger frame is equal to 1, a TXOP sharing mode corresponds to the first allocation mode (mode 1), or when the value of the TXOP sharing mode subfield in the MU-RTS TXS trigger frame is equal to 2, a TXOP sharing mode corresponds to the second allocation mode (mode 2). A P2P link used for P2P transmission herein is set up by two non-AP STAs through tunneled direct link setup (tunneled direct link setup, TDLS) or according to another P2P protocol. P2P may be referred to as device-to-device (device-to-device, D2D), TDLS, or the like in other technical descriptions. P2P, D2D, TDLS, and the like are essentially the same. This is not limited in this patent.

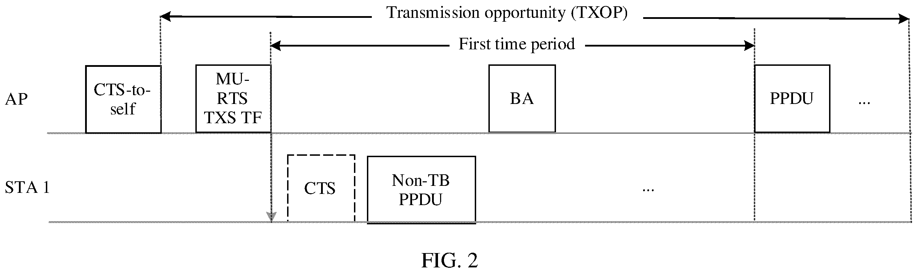

FIG. 2 shows a process in which an AP allocates a part of a time resource (namely, the first time period in FIG. 1) within a reserved TXOP to a STA 1 via an MU-RTS TXS trigger frame. As shown in FIG. 2, a clear to send to self (clear to send-to-self, CTS-to-self) frame sent by the AP is used to reserve the TXOP. The AP sends the MU-RTS TXS trigger frame to the STA 1, where the MU-RTS TXS trigger frame is used to allocate the part of the time resource (namely, the first time period in FIG. 1) within the reserved TXOP to the STA 1. After receiving the MU-RTS TXS trigger frame, the STA 1 replies to the AP with a CTS. After replying to the AP with the CTS, the STA 1 sends a non-TB PPDU. The AP makes a block acknowledgment (block ACK, BA) response to the non-TB PPDU from the STA 1. According to an existing NAV rule, if a NAV is set for a STA, the STA can make a response to only a frame sent by the TXOP holder to the STA, for example, make an ACK response or a BA response to data (data) sent by the AP to the STA, or send a TB PPDU on a resource unit (resource unit, RU) allocated by the AP via a basic trigger frame (basic trigger frame). If a NAV value of a STA is not 0, the STA is not allowed to actively send, for example, a single user (single user, SU) PPDU. To resolve this problem, one manner is to allow the STA to ignore, within the first time period allocated via the MU-RTS TXS frame, the NAV set by the AP for the STA. The corresponding description in English is as follows: After sending the CTS solicited by MU-RTS TXS from the associated AP, the STA that sends the responding CTS shall ignore the NAV that is set by the AP within the time allocation signaled in the MU-RTS TXS Trigger frame.

### 3. Channel access

A WLAN system operates on an unlicensed band, and a wireless channel of the WLAN system is shared. Channel access is required before a station performs sending. Before a station needs to transmit a radio frame, the station needs to sense whether another station is performing sending. If a channel sense result is busy, sending is temporarily suspended until the channel becomes idle. After the channel becomes idle, the station further needs to first perform random backoff before performing data transmission, to deal with collision between a plurality of potential transmit stations (that is, stations that send data) through the random backoff. The station can send the radio frame after the random backoff procedure ends when the channel is idle. Before data is transmitted to a target station, an exchange of a short control frame, for example, a request to send (request to send, RTS)/CTS, with the target station may also be performed first, to further reduce loss of a throughput caused by collision. After collision of the short frame exchange occurs, the transmit station can know as soon as possible that the collision has occurred, and therefore access a channel again after performing random backoff again. This avoids a transmission failure of an entire data frame due to direct transmission of a long data frame when the collision occurs.

### 4. NAV setting

In a WLAN system, a station needs to perform sense before performing channel access. The sense is classified into physical carrier sense and virtual carrier sense. The physical carrier sense is sensing energy on a channel and strength of a WLAN radio frame signal. When received energy or received strength of a WLAN radio frame is less than a threshold, the physical carrier sense is idle; otherwise, the physical carrier sense is busy. The virtual carrier sense is implemented by setting a NAV, and the virtual carrier sense maintains one NAV. When a NAV value is not 0, the virtual carrier sense is busy, or when a NAV value is 0, the virtual carrier sense is idle. Generally, the station is allowed to access a channel only when both the physical carrier sense and the virtual carrier sense are idle, to send a radio frame.

In an early WLAN system, a station has only one NAV. After correctly receiving a radio frame, the station may update the NAV based on information about a duration field in the radio frame. When a receiver address of a receive frame is a medium access control (medium access control, MAC) address of the receive frame, the station does not update the NAV. For another radio frame, when a value of a duration field in the radio frame is greater than a current NAV value of the station, the NAV is updated based on the value of the duration field. A NAV mechanism can effectively resolve a collision problem caused by a hidden node. The hidden node is a station that is not within signal coverage of a transmit station but whose sending may interfere with a receive station (that is, a station that receives data). In a process of sending a radio frame by the transmit station, the hidden node cannot sense sending of the transmit station, and therefore also sends a radio frame simultaneously. As a result, the receive station fails to correctly receive the radio frame due to interference. Due to use of the virtual carrier sense, after successfully contending for a channel, the transmit station may first exchange a short frame with the receive station, and a NAV is set for a non-target station around the transmit station and the receive station based on duration fields of two exchanged short frames. Therefore, it is ensured that the hidden node no longer contends for a channel or sends a radio frame within a time protected by the NAV. This time period protected by the NAV is usually referred to as a TXOP.

In the IEEE 802.11ax standard, two NAVs are introduced for finer management, one is referred to as an intra-BSS NAV, and the other is referred to as a basic NAV. The intra-BSS NAV is updated based on an intra-BSS PPDU, and the basic NAV is updated based on an inter-BSS PPDU or a PPDU that cannot be distinguished between an intra-BSS PPDU or an inter-BSS PPDU. The inter-BSS PPDU is simply a PPDU sent from a STA outside a current BSS, and the intra-BSS PPDU is simply a PPDU sent from a station within the current BSS. For a specific method for distinguishing between the inter-BSS PPDU and the intra-BSS PPDU, refer to the IEEE 802.11ax standard, and details are not described herein.

A station that is not a TXOP holder updates an intra-BSS NAV only when a receive frame (that is, a radio frame received by the station) meets all of the following conditions:
The receive frame is an intra-BSS PPDU.

A value of a duration field in the receive frame is greater than a current intra-BSS NAV value of the station.

A receiver address of the receive frame is not a MAC address of the station, or the receive frame does not trigger the station to make an immediate response, or the receive frame is a trigger frame.

A station updates a basic NAV only when a receive frame meets all of the following conditions:
The receive frame is an inter-BSS PPDU, or it is impossible to distinguish whether the receive frame is an intra-BSS PPDU or an inter-BSS PPDU.

A value of a duration field in the receive frame is greater than a current basic NAV value of the station.

A receiver address of the receive frame is not a MAC address of the station.

When both the intra-BSS NAV value and the basic NAV value are equal to 0, the virtual carrier sense is idle. In this case, the station can perform channel contention. When the station is triggered by an associated AP to make an immediate response, the station can make the response only when the physical carrier sense of the station is idle and the basic NAV value is 0. If the basic NAV value is not 0, no response can be replied with even if a physical carrier sense result is idle.

### 5. Transmission network allocation vector (transmission network allocation vector, TXNAV)

The TXNAV is a timer maintained inside a TXOP holder. The TXNAV is initialized based on a duration/ID field in a frame that is latest successfully sent by the TXOP holder. In other words, duration of the TXNAV is equal to the remaining duration of a current TXOP. The TXNAV starts timing from the end of a PPDU carrying the frame.

In an implementation, a station is allowed to ignore, within a time period allocated to the station via an MU-RTS TXS trigger frame, a NAV set by an AP for the station, that is, the station is allowed to perform autonomous sending. The corresponding description in English is as follows: After sending the CTS solicited by MU-RTS TXS from the associated AP, the STA that sends the responding CTS shall ignore the NAV that is set by the AP within the time allocation signaled in the MU-RTS TXS Trigger frame.

However, currently, the AP is further allowed to resume permission to control the TXOP when a specific condition is met. In this case, the station is not allowed to continue autonomous sending. If an extremely high throughput (extremely high throughput, EHT) AP determines that an MU-RTS TXS trigger frame with a TXOP sharing mode subfield equal to 1 is successfully transmitted to a non-AP EHT STA (see 26.2.6.2 (MU-RTS trigger frame transmission)), the AP is not allowed to send any PPDU within the allocated time specified in the MU-RTS TXS trigger frame, unless a PPDU carries an immediate response solicited by the non-AP STA. A carrier sense (carrier sense, CS) mechanism indicates that a medium at a TxPIFS boundary is idle after transmission of an immediate response frame sent to the STA ends or reception of a frame that does not require an immediate response from the STA ends. The corresponding description in English is as follows: If the EHT AP determines that its transmission of an MU-RTS TXS Trigger frame to a non-AP EHT STA with the TXOP Sharing Mode subfield equal to 1 is successful (see 26.2.6.2 (MU-RTS Trigger frame transmission)), then the AP shall not transmit any PPDU within the allocated time specified in the MU-RTS TXS Trigger frame unless: The PPDU carries an immediate response that is solicited by the non-AP STA; the CS mechanism indicates that the medium is idle at the TxPIFS slot boundary after the end of either the transmission of an immediate response frame sent to that STA or the reception of a frame from that STA that did not require an immediate response.

When the AP meets a specific condition, the STA cannot initiate channel contention within a remaining allocated time. However, according to a rule in a current protocol, the STA may ignore, within the entire allocated time, the NAV set by the AP. The STA may initiate channel contention in the remaining allocated time, resulting in interference to sending of the AP. In other words, after the AP resumes the permission to control the TXOP, the station ignores, within the time period allocated to the station via the MU-RTS TXS frame, the NAV set by the AP for the station. This may result in interference to sending of the AP. An example of an existing a triggered transmission opportunity sharing mechanism-based communication solution is as follows: After an AP allocates a first time period to a STA via an MU-RTS TXS trigger frame for non-TB PPDU sending, if the AP again obtains, within the first time period, permission to use a TXOP, the STA ignores, within a remaining time of the first time period, the NAV set by the AP, which may result in interference to sending of the AP. It can be learned that, currently, an existing triggered transmission opportunity sharing mechanism-based communication solution has a problem that the station may interfere with sending of the AP. Therefore, a triggered transmission opportunity sharing mechanism-based communication solution that can avoid interference to sending of the AP needs to be studied. A triggered transmission opportunity sharing mechanism-based communication solution provided in this application can avoid the interference to sending of the AP. A main principle of the triggered transmission opportunity sharing mechanism-based communication solution provided in embodiments of this application is to determine a condition in which the STA loses the permission to use the time period allocated by the AP to the STA via the MU-RTS TXS frame. Correspondingly, within the remaining time period, the STA is not allowed to ignore the NAV set by the AP for the STA.

The following describes, with reference to accompanying drawings, the communication solution provided in embodiments of this application.

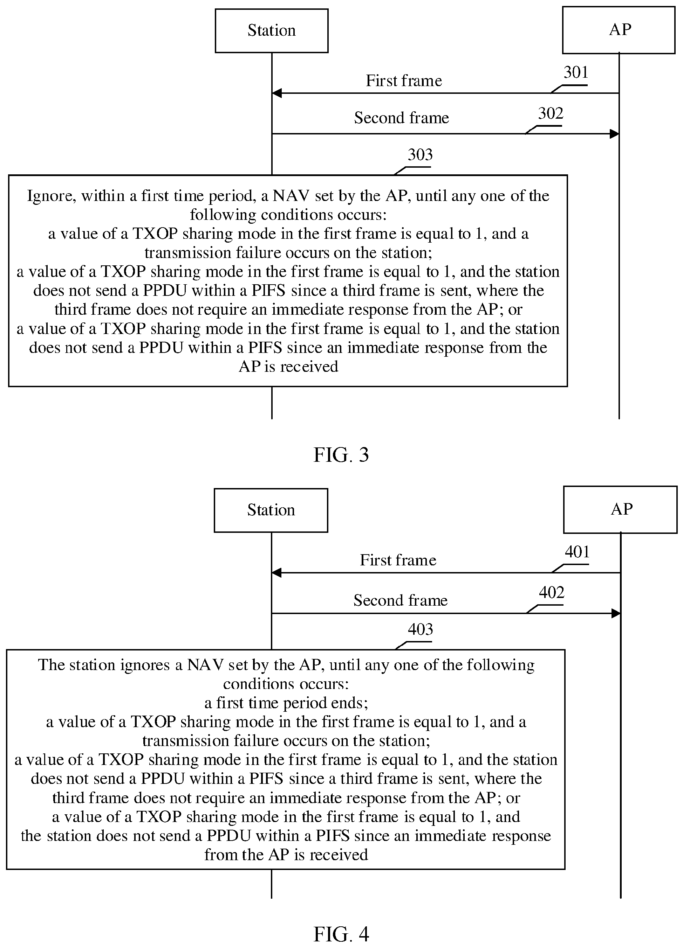

FIG. 3 is an interaction flowchart of a triggered transmission opportunity sharing mechanism-based communication method according to an embodiment of this application. As shown in FIG. 3, the method includes the following steps.

### 301: An AP sends a first frame to a station.

Correspondingly, the station (STA) receives the first frame from the AP. The first frame indicates that the access point allocates a first time period to the station. For example, the first frame indicates that the access point allocates the first time period within a reserved TXOP to the station. Optionally, the first frame is an MU-RTS TXS trigger frame. Alternatively, the first frame may be another radio frame indicating that the access point allocates the first time period to the station. This is not limited in this application. The first time period may be any time period that is within the TXOP and that is allocated by the AP to the station. This is not limited in this application.

In a possible implementation, a first field in the first frame indicates that the station is allowed to only perform frame transmission with the access point within the allocated time (namely, the first time period). Optionally, the first field is a TXOP sharing mode subfield, and a value of the first field is equal to 1.

### 302: The station replies to the AP with a second frame for the first frame.

The second frame indicates that the station successfully receives the first frame. The second frame may be a CTS frame, or may be another frame. That the station needs to reply to the AP with the CTS frame for the first frame is not limited in embodiments of this application.

303: Ignore, within the first time period, a NAV set by the AP, until any one of the following conditions occurs:
A value of a TXOP sharing mode in the first frame is equal to 1, and a transmission failure occurs on the station. That is, the TXOP sharing mode in the first frame is that the station is allowed to only perform frame transmission with the associated AP within the allocated time, and the transmission failure occurs on the station.

A value of a TXOP sharing mode in the first frame is equal to 1, and the station does not send a PPDU within a PIFS since a third frame is sent. That is, the TXOP sharing mode in the first frame is that the station is allowed to only perform frame transmission with the associated AP within the allocated time, and the station does not send the PPDU within the PIFS since the third frame is sent, where the third frame does not require an immediate response from the AP.

A value of a TXOP sharing mode in the first frame is equal to 1, and the station does not send a PPDU within a PIFS since an immediate response from the AP is received. That is, the TXOP sharing mode in the first frame is that the station is allowed to only perform frame transmission with the associated AP within the allocated time, and the station does not send the PPDU within the PIFS since the immediate response from the AP is received.

"The value of the TXOP sharing mode in the first frame is equal to 1" mentioned in the foregoing description may be equivalently replaced with "the TXOP sharing mode in the first frame is that the station is allowed to only perform frame transmission with the associated AP within the allocated time". The PIFS mentioned in the foregoing description may be equivalently replaced with preset duration. It may be understood that the PIFS is merely an example of the preset duration, and the preset duration may be configured based on a requirement.

In other words, if any one of the following conditions occurs within the first time period, the station does not ignore the NAV set by the access point. These conditions are as follows:
The value of the TXOP sharing mode in the first frame is equal to 1, and the transmission failure occurs on the station.

The value of the TXOP sharing mode in the first frame is equal to 1, and the station does not send the PPDU within the PIFS since the third frame is sent, where the third frame does not require the immediate response from the AP.

The value of the TXOP sharing mode in the first frame is equal to 1, and the station does not send the PPDU within the PIFS since the immediate response from the AP is received.

That the NAV set by the access point is ignored may be understood as that, if the current NAV (which may be specifically an intra-BSS NAV) is set based on a frame sent by the associated access point, even if a current NAV value is not 0, the station may also process the NAV value as 0; or if the current NAV is not set based on a frame sent by the associated access point, when a NAV value is not 0, the station needs to consider that a current virtual carrier sense result is busy.

That the NAV set by the access point is not ignored may be understood as that, regardless of whether a current NAV (which may be specifically an intra-BSS NAV) value is set based on a frame sent by the associated access point, as long as the current NAV value is not 0, the station needs to consider that a current virtual carrier sense result is busy.

When the STA has an intra-BSS NAV and a basic NAV, detailed virtual carrier sense results may be summarized in the following table.

**Table 1**

| | Intra-BSS NAV | Basic NAV | Virtual carrier sense result |
|---|---|---|---|
| Do not ignore the NAV set by the access point | 0 | 0 | Idle |
| | Not 0, and set by the AP | 0 | Busy |
| | Not 0, and not set by the AP | 0 | Busy |
| | 0 | Not 0 | Busy |
| | Not 0, and set by the AP | Not 0 | Busy |
| | Not 0, and not set by the AP | Not 0 | Busy |
| Ignore the NAV set by the access point | 0 | 0 | Idle |
| | Not 0, and set by the AP | 0 | Idle |
| | Not 0, and not set by the AP | 0 | Busy |
| | 0 | Not 0 | Busy |
| | Not 0, and set by the AP | Not 0 | Busy |
| | Not 0, and not set by the AP | Not 0 | Busy |

Table 1 shows the virtual carrier sense results obtained when the STA has the intra-BSS NAV and the basic NAV. It can be seen from a third row of Table 1 that, when the NAV set by the access point is not ignored, if a NAV value set by the AP is not 0 (that is, non-zero) and a basic NAV value is 0, the station determines that the virtual carrier sense result is busy. It can be seen from a fourth row of Table 1 that, when the NAV set by the access point is not ignored, if a NAV value that is not set by the AP is not 0 (that is, non-zero) and the basic NAV value is 0, the station determines that the virtual carrier sense result is busy. It can be seen from a ninth row of Table 1 that, when the NAV set by the access point is ignored, if a NAV value set by the AP is not 0 (that is, non-zero) and a basic NAV value is 0, the station determines that the virtual carrier sense result is idle. It can be seen from a tenth row of Table 1 that, when the NAV set by the access point is ignored, if a NAV value that is not set by the AP is not 0 (that is, non-zero) and the basic NAV value is 0, the station determines that the virtual carrier sense result is busy. Only meanings expressed by the four rows in Table 1 are described herein. A meaning of each row in Table 1 may be interpreted in a same manner, and the meaning of each row is not described herein again.

After replying to the AP with the second frame for the first frame, the station performs step 303. Step 303 may be understood as that, before any one of the foregoing conditions occurs, the station ignores, within the first time period, the NAV set by the access point. In other words, before any one of the foregoing conditions occurs, the station may perform autonomous sending within the first time period. The NAV set by the access point may be understood as a NAV set by the access point for the station. The NAV set by the access point may include the intra-BSS NAV and/or the basic NAV of the station. The third frame does not require the immediate response from the access point, that is, an acknowledgment policy Ack Policy subfield in the third frame is set to no acknowledgment (No Ack). That the transmission failure occurs on the station means that the station sends a frame that requires an immediate response, but fails to receive a response frame after a short interframe space (short inter-frame space, SIFS) time since sending of the frame ends. In this case, it is determined that the sending fails.

Step 303 may be replaced with that, after the NAV set by the access point starts to be ignored within the first time period, and after a first condition occurs within the first time period, when a NAV value set by the access point is equal to 0, it is determined that the virtual carrier sense is idle, or when a NAV value set by the access point is not equal to 0, it is determined that the virtual carrier sense is busy. The first condition includes any one of the following:
The value of the TXOP sharing mode in the first frame is equal to 1, and the transmission failure occurs on the station.

The value of the TXOP sharing mode in the first frame is equal to 1, and the station does not send the PPDU within the PIFS since the third frame is sent, where the third frame does not require the immediate response from the AP.

The value of the TXOP sharing mode in the first frame is equal to 1, and the station does not send the PPDU within the PIFS since the immediate response from the AP is received.

Alternatively, step 303 may be replaced with that, the STA ignores, within the time period allocated via the MU-RTS TXS trigger frame, the NAV set by the AP for the STA, until any one of the following conditions occurs: The value of the TXOP sharing mode in the MU-RTS TXS trigger frame is equal to 1, and the STA does not initiate any PPDU transmission within the PIFS since the immediate response from the AP is received; the value of the TXOP sharing mode in the MU-RTS TXS trigger frame is equal to 1, and the STA does not initiate any PPDU transmission within a PIFS since a frame that does not require an immediate response is sent; or the value of the TXOP sharing mode in the MU-RTS TXS trigger frame is equal to 1, and the transmission failure occurs on the STA.

A method procedure in FIG. 3 may be described as follows: After the station (station, STA) sends the CTS for the MU-RTS TXS trigger frame (corresponding to the first frame) from the AP, the STA needs to ignore, within the time period allocated via the MU-RTS TXS trigger frame, the NAV set by the AP for the STA, until any one of the following conditions occurs: The value of the TXOP sharing mode in the MU-RTS TXS trigger frame is equal to 1, and the STA does not initiate any PPDU transmission within the PIFS since the immediate response from the AP is received; the value of the TXOP sharing mode in the MU-RTS TXS trigger frame is equal to 1, and the STA does not initiate any PPDU transmission within the PIFS since the frame that does not require the immediate response is sent; or the value of the TXOP sharing mode in the MU-RTS TXS trigger frame is equal to 1, and the transmission failure occurs on the STA. The corresponding translation in English may be as follows: After sending the CTS solicited by MU-RTS TXS from the associated AP, the STA that sends the responding CTS shall ignore the NAV that is set by the AP within the time allocation signaled in the MU-RTS TXS Trigger frame until any of the conditions occurs: the STA does not initiate any PPDU transmission within the PIFS after receiving an immediate response from the associated AP if the TXOP Sharing Mode subfield value equals to 1; the STA does not initiate any PPDU transmission within the PIFS after sending a frame that does not require an immediate response if the TXOP Sharing Mode subfield value equals to 1; transmission failure happens if the TXOP Sharing Mode subfield values equal to 1.

In a possible implementation, after any one of the foregoing conditions occurs, the station may perform the following operation: initiating channel contention after detecting, within the first time period, that the virtual carrier sense is idle. In other words, the station does not initiate channel contention before detecting that the virtual carrier sense is idle. This can avoid interference to sending of the AP, and can reduce or avoid the interference to sending of the AP.

In this embodiment of this application, after the first frame is replied to with the second frame, the NAV set by the access point is ignored within the first time period until any one of the foregoing conditions occurs. This can avoid the interference to sending of the AP.

FIG. 4 is an interaction flowchart of another triggered transmission opportunity sharing mechanism-based communication method according to an embodiment of this application. A method procedure in FIG. 4 is essentially the same as the method procedure in FIG. 3, but has a different description manner from the method procedure in FIG. 3. As shown in FIG. 4, the method includes the following steps.

### 401: An AP sends a first frame to a station.

For step 401, refer to step 301.

### 402: The station replies to the AP with a second frame for the first frame.

For step 402, refer to step 302.

403: The station ignores a NAV set by the AP, until any one of the following conditions occurs:
A first time period ends.

A value of a TXOP sharing mode in the first frame is equal to 1, and a transmission failure occurs on the station.

A value of a TXOP sharing mode in the first frame is equal to 1, and the station does not send a PPDU within a PIFS since a third frame is sent, where the third frame does not require an immediate response from the AP.

A value of a TXOP sharing mode in the first frame is equal to 1, and the station does not send a PPDU within a PIFS since an immediate response from the AP is received.

In other words, if any one of the following conditions occurs, the station does not ignore the NAV set by the access point. These conditions are as follows:
The first time period ends.

The value of the TXOP sharing mode in the first frame is equal to 1, and the transmission failure occurs on the station.

The value of the TXOP sharing mode in the first frame is equal to 1, and the station does not send the PPDU within the PIFS since the third frame is sent, where the third frame does not require the immediate response from the AP.

The value of the TXOP sharing mode in the first frame is equal to 1, and the station does not send the PPDU within the PIFS since the immediate response from the AP is received.

After replying to the AP with the second frame for the first frame, the station performs step 403. Step 403 may be understood as that, before any one of the foregoing conditions occurs, the station ignores the NAV set by the access point. In other words, before any one of the foregoing conditions occurs, the station may perform autonomous sending. For explanations of terms or nouns in FIG. 4, refer to FIG. 3. Details are not described herein again.

Step 403 may be replaced with that, after the NAV set by the access point starts to be ignored, and after a first condition occurs, when a NAV value is equal to 0, it is determined that virtual carrier sense is idle, or when a NAV value is not equal to 0, it is determined that virtual carrier sense is busy. The first condition includes any one of the following:
The first time period ends.

The value of the TXOP sharing mode in the first frame is equal to 1, and the transmission failure occurs on the station.

The value of the TXOP sharing mode in the first frame is equal to 1, and the station does not send the PPDU within the PIFS since the third frame is sent, where the third frame does not require the immediate response from the AP.

The value of the TXOP sharing mode in the first frame is equal to 1, and the station does not send the PPDU within the PIFS since the immediate response from the AP is received.

Alternatively, step 403 may be replaced with that, the STA ignores, within the time period allocated via the MU-RTS TXS trigger frame, the NAV set by the AP for the STA, until any one of the following conditions occurs: A time allocation signal in the MU-RTS TXS trigger frame ends, that is, the first time period ends; the value of the TXOP sharing mode in the MU-RTS TXS trigger frame is equal to 1, and the STA does not initiate any PPDU transmission within the PIFS since the immediate response from the AP is received; the value of the TXOP sharing mode in the MU-RTS TXS trigger frame is equal to 1, and the STA does not initiate any PPDU transmission within a PIFS since a frame that does not require an immediate response is sent; or the value of the TXOP sharing mode in the MU-RTS TXS trigger frame is equal to 1, and the transmission failure occurs on the STA.

The method procedure in FIG. 4 may be described as follows: After the station (station, STA) sends the CTS for the MU-RTS TXS trigger frame (corresponding to the first frame) from the AP, the STA ignores the NAV set by the AP for the STA, until any one of the following conditions occurs: The time allocation signal in the MU-RTS TXS trigger frame ends; the value of the TXOP sharing mode in the MU-RTS TXS trigger frame is equal to 1, and the STA does not initiate any PPDU transmission within the PIFS since the immediate response from the AP is received; the value of the TXOP sharing mode in the MU-RTS TXS trigger frame is equal to 1, and the STA does not initiate any PPDU transmission within the PIFS since the frame that does not require the immediate response is sent; or the value of the TXOP sharing mode in the MU-RTS TXS trigger frame is equal to 1, and the transmission failure occurs on the STA. The corresponding translation in English may be as follows: After sending the CTS solicited by MU-RTS TXS from the associated AP, the STA that sends the responding CTS shall ignore the NAV that is set by the AP until any of the conditions occurs: the time allocation signaled in the MU-RTS TXS Trigger frame ends; the STA does not initiate any PPDU transmission within the PIFS after receiving an immediate response from the associated AP if the TXOP Sharing Mode subfield value equals to 1; the STA does not initiate any PPDU transmission within the PIFS after sending a frame that does not require an immediate response if the TXOP Sharing Mode subfield value equals to 1; transmission failure happens if the TXOP Sharing Mode subfield values equal to 1.

In this embodiment of this application, after replying with the second frame for the first frame, the station ignores the NAV set by the access point, until any one of the foregoing conditions occurs. This can avoid interference to sending of the AP.

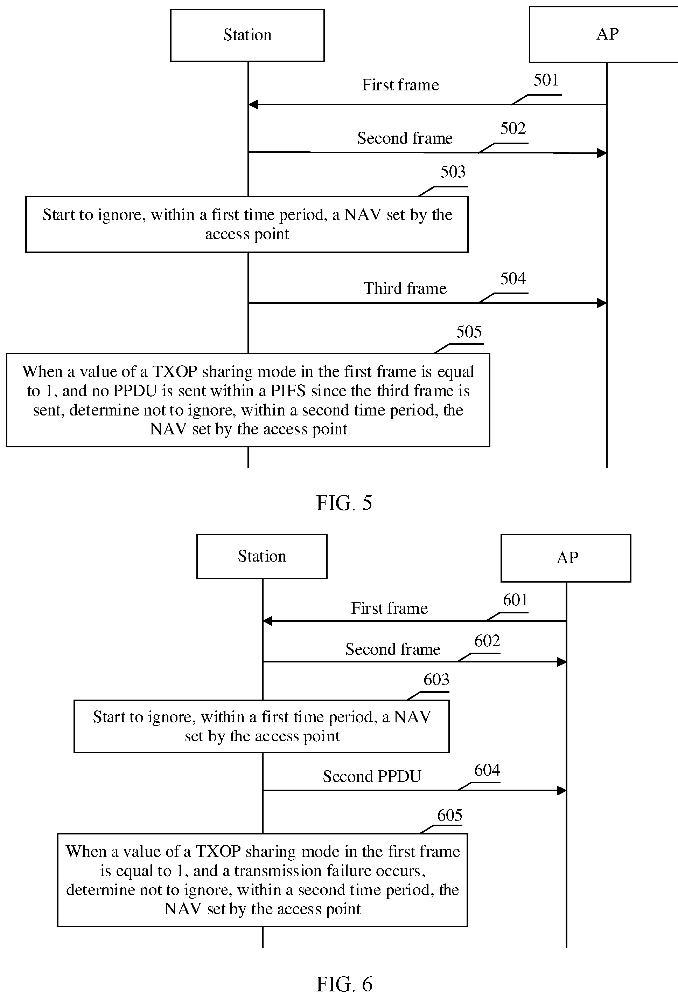

FIG. 5 is an interaction flowchart of another triggered transmission opportunity sharing mechanism-based communication method according to an embodiment of this application. A method procedure in FIG. 5 is a possible implementation of the method described in FIG. 3 or FIG. 4. In this implementation, when a station does not send a PPDU within a PIFS since a third frame is sent, the station no longer ignores a NAV set by an AP for the station. This can avoid interference to sending of the AP. As shown in FIG. 5, the method includes the following steps.

501: The AP sends a first frame to the station.

For step 501, refer to step 301.

502: The station replies to the AP with a second frame for the first frame.

For step 502, refer to step 302.

503: The station starts to ignore, within a first time period, the NAV set by the access point.

After replying to the AP with the second frame for the first frame, the station performs step 503. Step 503 may be understood as that, after replying to the AP with the second frame for the first frame, the station starts to ignore the NAV set by the access point. In other words, after replying to the AP with the second frame for the first frame, the station starts to ignore, at a start time of the first time period, the NAV set by the access point.

504: The station sends the third frame to the AP.

Correspondingly, the AP receives the third frame from the station. The third frame may be any radio frame that does not require an immediate response from the AP, for example, a PPDU. In other words, the AP does not need to make the immediate response to the third frame.

505: When a value of a TXOP sharing mode in the first frame is equal to 1, and no PPDU is sent within a PIFS since the third frame is sent, the station determines not to ignore, within a second time period, the NAV set by the access point.

A start time of the second time period may be a time at which the station determines that no PPDU is sent within the PIFS since the third frame is sent, and an end time of the second time period is an end time of the first time period. The second time period is included in the first time period. In actual application, the PIFS may be replaced with other duration. This is not limited in embodiments of this application. It should be understood that, once the case in which no PPDU is sent within the PIFS since the third frame is sent occurs (is detected), the station no longer continues to ignore the NAV set by the access point, that is, cannot continue to perform autonomous sending.

Alternatively, step 505 may be replaced with that, in the case in which no PPDU is sent within the PIFS since the third frame is sent, when a NAV value is equal to 0, the station determines that virtual carrier sense is idle, or when a NAV value is not equal to 0, the station determines that virtual carrier sense is busy. Determining, when the NAV value is equal to 0, that the virtual carrier sense is idle may be replaced with determining, when both the intra-BSS NAV value and a basic NAV value of the station are equal to 0, that the virtual carrier sense is idle. Determining, when the NAV value is not equal to 0, that the virtual carrier sense is busy may be replaced with determining, when at least one of the intra-BSS NAV value and a basic NAV value of the station is not equal to 0, that the virtual carrier sense is busy.

Alternatively, step 505 may be replaced with that, when any PPDU is sent within the PIFS since the third frame is sent, the station continues to ignore the NAV set by the access point.

In this embodiment of this application, when the station does not send the PPDU within the PIFS since the third frame is sent, the station no longer ignores the NAV set by the AP for the station. This can avoid the interference to sending of the AP.

FIG. 6 is an interaction flowchart of another triggered transmission opportunity sharing mechanism-based communication method according to an embodiment of this application. A method procedure in FIG. 6 is a possible implementation of the method described in FIG. 3 or FIG. 4. In this implementation, when a transmission failure occurs (transmission failure happens), a station no longer ignores a NAV set by an AP for the station. This can avoid interference to sending of the AP. As shown in FIG. 6, the method includes the following steps.

601: The AP sends a first frame to the station.

For step 601, refer to step 301.

602: The station replies to the AP with a second frame for the first frame.

For step 602, refer to step 302.

603: The station starts to ignore, within a first time period, the NAV set by the access point.

After replying to the AP with the second frame for the first frame, the station performs step 603. Step 603 may be understood as that, after replying to the AP with the second frame for the first frame, the station starts to ignore the NAV set by the access point. In other words, after replying to the AP with the second frame for the first frame, the station starts to ignore, at a start time of the first time period, the NAV set by the access point.

604: The station sends a second PPDU to the AP.

Correspondingly, the AP receives the second PPDU from the station. The second PPDU may be a PPDU that requires an immediate response from the AP, or may be a PPDU that does not require an immediate response from the AP. This is not limited in embodiments of this application. Step 604 is optional rather than mandatory. When the second PPDU is the PPDU that requires the immediate response from the AP, the station may receive the immediate response from the AP for the second PPDU after sending the second PPDU to the AP.

605: When a value of a TXOP sharing mode in the first frame is equal to 1 and the transmission failure occurs, the station determines not to ignore, within the second time period, the NAV set by the access point.

Occurrence of the transmission failure may be referred to as occurrence of a transmission fault. A start time of the second time period may be a time at which the station determines that the transmission failure occurs, and an end time of the second time period is an end time of the first time period. The second time period is included in the first time period.

Alternatively, step 605 may be replaced with that, when the transmission failure occurs, when a NAV value set by the access point is equal to 0, the station determines that virtual carrier sense is idle; or when a NAV value set by the access point is not equal to 0, the station determines that virtual carrier sense is busy.

In this embodiment of this application, when the transmission failure occurs, the station no longer ignores the NAV set by the AP for the station. This can avoid the interference to sending of the AP.

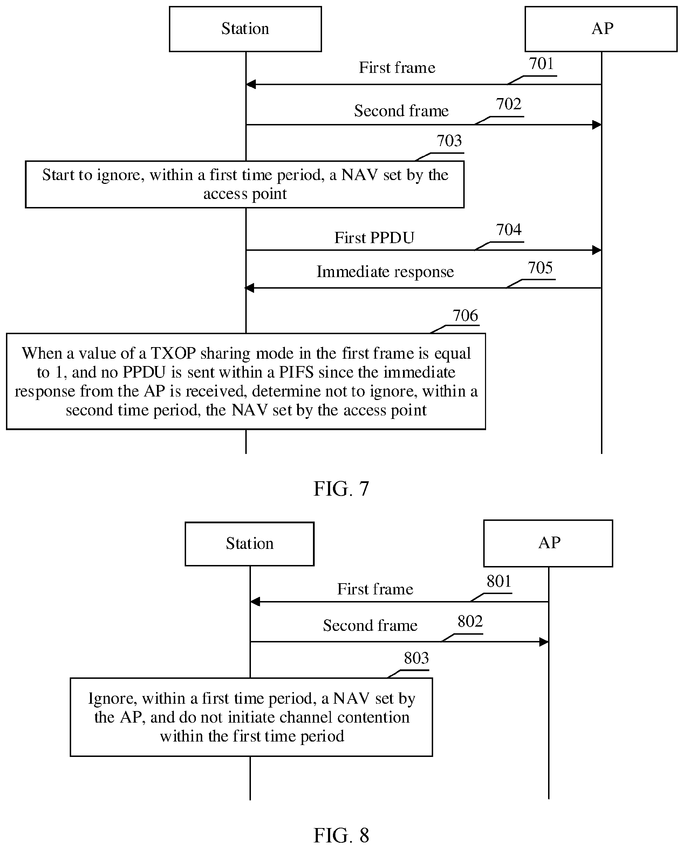

FIG. 7 is an interaction flowchart of another triggered transmission opportunity sharing mechanism-based communication method according to an embodiment of this application. A method procedure in FIG. 7 is a possible implementation of the method described in FIG. 3 or FIG. 4. In this implementation, when a STA does not initiate any PPDU transmission within a PIFS since an immediate response from an AP is received, the STA no longer ignores a NAV set by the AP for the STA. This can avoid interference to sending of the AP. As shown in FIG. 7, the method includes the following steps.

701: The AP sends a first frame to the station.

For step 701, refer to step 301.

702: The station replies to the AP with a second frame for the first frame.

For step 702, refer to step 302.

703: The station starts to ignore, within a first time period, the NAV set by the access point.

After replying to the AP with the second frame for the first frame, the station performs step 703. Step 703 may be understood as that, after replying to the AP with the second frame for the first frame, the station starts to ignore the NAV set by the access point. In other words, after replying to the AP with the second frame for the first frame, the station starts to ignore, at a start time of the first time period, the NAV set by the access point.

704: The station sends a first PPDU to the AP.

Correspondingly, the AP receives the first PPDU from the station. The first PPDU is any PPDU for which the AP needs to reply with an immediate response (immediate response). Optionally, the first PPDU is a non-TB PPDU, and the non-TB PPDU requires the AP to reply with the immediate response.

705: The AP replies to the station with the immediate response for the first PPDU.

Correspondingly, the station receives the immediate response replied by the AP to the station for the first PPDU.

706: When a value of a TXOP sharing mode in the first frame is equal to 1 and no PPDU is sent within the PIFS since the immediate response from the AP is received, the station determines not to ignore, within a second time period, the NAV set by the access point.

A start time of the second time period may be a time at which the station determines that no PPDU is sent within the PIFS since the immediate response from the AP is received, and an end time of the second time period is an end time of the first time period. The second time period is included in the first time period.

Step 706 may be replaced with that, when no PPDU is sent within the PIFS since the immediate response from the AP is received, when a NAV value set by the access point is equal to 0, the station determines that virtual carrier sense is idle, or when a NAV value set by the access point is not equal to 0, the station determines that virtual carrier sense is busy. Determining, when the NAV value set by the access point is equal to 0, that the virtual carrier sense is idle may be replaced with determining, when both the intra-BSS NAV value and a basic NAV value of the station are equal to 0, that the virtual carrier sense is idle. Optionally, the station initiates channel contention after determining that the virtual carrier sense is idle. In other words, the station cannot initiate channel contention before determining that the virtual carrier sense is idle.

Alternatively, step 706 may be replaced with that, when any PPDU is sent within the PIFS since the immediate response from the AP is received, the station continues to ignore the NAV set by the access point.

In this embodiment of this application, when the STA does not initiate any PPDU transmission within the PIFS since the immediate response from the AP is received, the STA no longer ignores the NAV set by the AP for the STA. This can avoid the interference to sending of the AP.

FIG. 8 is an interaction flowchart of another triggered transmission opportunity sharing mechanism-based communication method according to an embodiment of this application. A method procedure in FIG. 8 is different from the method procedure in FIG. 3 in technical essence. As shown in FIG. 8, the method includes the following steps.

801: An AP sends a first frame to a station.

For step 801, refer to step 301. The first frame indicates that the access point allocates a first time period to the station.

In a possible implementation, a first field in the first frame indicates that the station is allowed to only perform frame transmission with the associated AP within the allocated time. Optionally, the first field is a TXOP sharing mode subfield, and a value of the first field is equal to 1. In this implementation, the first field is the TXOP sharing mode subfield, and the value of the first field is equal to 1, so that whether to skip initiating channel contention within the first time period is determined based on the first field.

802: The station replies to the AP with a second frame for the first frame.

For step 802, refer to step 302.

803: The station ignores, within the first time period, a NAV set by the AP, and does not initiate channel contention within the first time period.

An implementation in which the station does not initiate channel contention within the first time period is not limited in embodiments of this application. In other words, any manner that can achieve a technical objective that the station does not initiate channel contention within the first time period falls within the protection scope of this application. Optionally, the station sets a basic NAV to a value greater than 0 and keeps the value unchanged. Optionally, the station sets a basic NAV to a value greater than duration of the first time period.

Step 803 may be replaced with that, if the value of the TXOP sharing mode subfield in the MU-RTS TXS trigger frame is 1, the station does not initiate channel contention within the time period allocated in the MU-RTS TXS trigger frame.

The method procedure in FIG. 8 may be described as follows: After the station sends the CTS frame for the MU-RTS TXS trigger frame from the AP, the station ignores, within the time period allocated via the MU-RTS TXS trigger frame, the NAV set by the AP for the station; and if the value of the TXOP sharing mode subfield in the MU-RTS TXS trigger frame is 1, the station does not initiate channel contention within the time period allocated via the MU-RTS TXS trigger frame. The corresponding translation in English may be as follows: After sending the CTS solicited by MU-RTS TXS from the associated AP, the STA that sends the responding CTS shall ignore the NAV that is set by the AP within the time allocation signaled in the MU-RTS TXS Trigger frame. The STA shall not initiate channel contention within the time allocation signaled in the MU-RTS TXS Trigger frame if the TXOP Sharing Mode subfield value equals to 1.

In this embodiment of this application, after the first frame is replied to with the second frame, the NAV set by the access point is ignored within the first time period, and channel contention is not initiated within the first time period. This can reduce or avoid interference to sending of the AP.

With reference to accompanying drawings, the following describes a structure of a communication apparatus that can implement the triggered transmission opportunity sharing mechanism-based communication method provided in embodiments of this application.

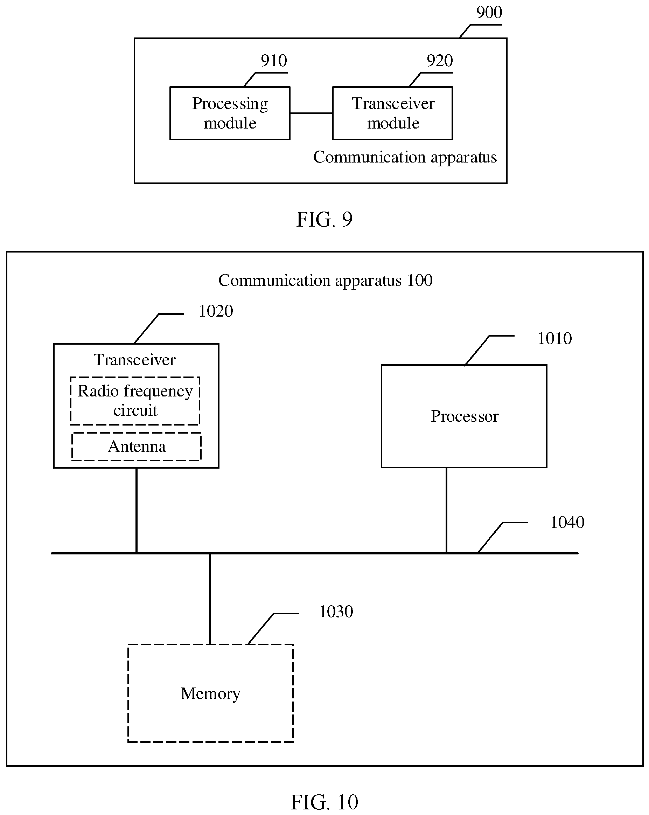

FIG. 9 is a diagram of a structure of a communication apparatus 900 according to an embodiment of this application. The communication apparatus 900 may correspondingly implement functions or steps implemented by the station in the foregoing method embodiments, or may correspondingly implement functions or steps implemented by the access point in the foregoing method embodiments. The communication apparatus may include a processing module 910 and a transceiver module 920. Optionally, a storage unit may be further included. The storage unit may be configured to store instructions (code or a program) and/or data. The processing module 910 and the transceiver module 920 may be coupled to the storage unit. For example, the processing module 910 may read the instructions (the code or the program) and/or the data in the storage unit, to implement a corresponding method. The foregoing units may be independently disposed, or may be partially or completely integrated. For example, the transceiver module 920 may include a sending module and a receiving module. The sending module may be a transmitter, and the receiving module may be a receiver. An entity corresponding to the transceiver module 920 may be a transceiver, or may be a communication interface.

In some possible implementations, the communication apparatus 900 can correspondingly implement behavior and functions of the station in the foregoing method embodiments. For example, the communication apparatus 900 may be a station, or may be a component (for example, a chip or a circuit) used in a station. For example, the transceiver module 920 may be configured to perform all receiving or sending operations performed by the station in the embodiments in FIG. 3 to FIG. 8, and/or configured to support another process of the technology described in this specification. The processing module 910 is configured to perform all operations, other than the receiving or sending operations, performed by the station in the embodiments in FIG. 3 to FIG. 8.

**In** some possible implementations, the communication apparatus 900 can correspondingly implement behavior and functions of the access point in the foregoing method embodiments. For example, the communication apparatus 900 may be an access point, or may be a component (for example, a chip or a circuit) used in an access point. For example, the transceiver module 920 may be configured to perform all receiving or sending operations performed by the access point in the embodiments in FIG. 3 to FIG. 8, and/or configured to support another process of the technology described in this specification. The processing module 910 is configured to perform all operations, other than the receiving or sending operations, performed by the access point.

FIG. 10 is a diagram of a structure of another communication apparatus 100 according to an embodiment of this application. The communication apparatus in FIG. 10 may be the foregoing station, or may be the foregoing access point.

As shown in FIG. 10, the communication apparatus 100 includes at least one processor 1010 and a transceiver 1020.

**In** some embodiments of this application, the processor 1010 and the transceiver 1020 may be configured to perform functions, operations, or the like performed by the station. For example, the transceiver 1020 performs all receiving or sending operations performed by the station in the embodiments in FIG. 3 to FIG. 8. For example, the processor 1010 is configured to perform all operations, other than the receiving or sending operations, performed by the station in the embodiments in FIG. 3 to FIG. 8.

**In** some embodiments of this application, the processor 1010 and the transceiver 1020 may be configured to perform functions, operations, or the like performed by the access point. For example, the transceiver 1020 performs all receiving or sending operations performed by the access point in the embodiments in FIG. 3 to FIG. 8. The processor 1010 is configured to perform all operations, other than the receiving or sending operations, performed by the access point.

The transceiver 1020 is configured to communicate with another device/apparatus through a transmission medium. The processor 1010 receives or sends data and/or signaling through the transceiver 1020, and is configured to implement the method in the foregoing method embodiments. The processor 1010 may implement functions of the processing module 910, and the transceiver 1020 may implement functions of the transceiver module 920.

Optionally, the transceiver 1020 may include a radio frequency circuit and an antenna. The radio frequency circuit is mainly configured to perform conversion between a baseband signal and a radio frequency signal, and process the radio frequency signal. The antenna is mainly configured to receive or send a radio frequency signal in a form of an electromagnetic wave. An input/output apparatus, for example, a touchscreen, a display, or a keyboard, is mainly configured to receive data input by a user and output data to the user.

Optionally, the communication apparatus 100 may further include at least one memory 1030, configured to store program instructions and/or data. The memory 1030 is coupled to the processor 1010. Coupling in embodiments of this application is indirect coupling or a communication connection between apparatuses, units, or modules, may be in an electrical form, a mechanical form, or another form, and is used for information exchange between the apparatuses, the units, or the modules. The processor 1010 may cooperate with the memory 1030. The processor 1010 may execute the program instructions stored in the memory 1030. At least one of the at least one memory may be included in the processor.

After the communication apparatus 100 is powered on, the processor 1010 may read the software program in the memory 1030, interpret and execute instructions of the software program, and process data of the software program. When data needs to be sent wirelessly, the processor 1010 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1010. The processor 1010 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

A specific connection medium between the transceiver 1020, the processor 1010, and the memory 1030 is not limited in embodiments of this application. In this embodiment of this application, the memory 1030, the processor 1010, and the transceiver 1020 are connected to each other through a bus 1040 in FIG. 10. The bus is represented by a thick line in FIG. 10. A connection manner of other components is merely an example for description and is not limited thereto. The bus may be classified into an address bus, a data bus, a control bus, or the like. For ease of representation, the bus is represented by only one thick line in FIG. 10. However, this does not mean that there is only one bus or one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

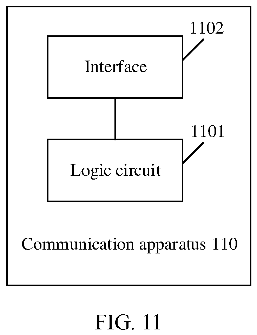

FIG. 11 is a diagram of a structure of another communication apparatus 110 according to an embodiment of this application. As shown in FIG. 11, the communication apparatus shown in FIG. 11 includes a logic circuit 1101 and an interface 1102. The processing module 910 in FIG. 9 may be implemented through the logic circuit 1101, and the transceiver module 920 in FIG. 9 may be implemented through the interface 1102. The logic circuit 1101 may be a chip, a processing circuit, an integrated circuit, a system on chip (system on chip, SoC), or the like. The interface 1102 may be a communication interface, an input/output interface, or the like. In this embodiment of this application, the logic circuit and the interface may be further coupled to each other. A specific connection manner of the logical circuit and the interface is not limited in embodiments of this application.

In some embodiments of this application, the logic circuit and the interface may be configured to perform functions, operations, or the like performed by the station.

In some embodiments of this application, the logic circuit and the interface may be configured to perform functions, operations, or the like performed by the access point.

This application further provides a computer-readable storage medium. The computer-readable storage medium stores a computer program or instructions. When the computer program or the instructions are run on a computer, the computer is enabled to perform the method in the foregoing embodiments. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. The computer may be a general-purpose computer, a dedicated computer, a computer network, or another programmable apparatus.

It should be noted that a person of ordinary skill in the art may understand that all or some of the steps of the methods in embodiments may be implemented by a program instructing related hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory, (electrically-erasable programmable read-only memory, EEPROM), a compact disc read-only memory (compact disc read-only memory, CD-ROM) or another optical disk memory, a magnetic disk memory, a magnetic tape memory, or any other computer-readable medium that can be configured to carry or store data.

This application further provides a computer program product. The computer program product includes instructions or a computer program. When the instructions or the computer program is run on a computer, the method in the foregoing embodiments is performed. The computer program product includes one or more computer instructions. When the computer program instructions are loaded and executed on the computer, all or some of the foregoing procedures or functions in embodiments of this application are generated.

All or some of the foregoing embodiments may be implemented by software, hardware, firmware, or any combination thereof. When the software is used for implementation, all or some of the foregoing embodiments may be implemented in a form of a computer program product.

This application further provides a communication system, including the foregoing station and the foregoing access point.

The technical solutions of this application essentially, or the part contributing to the conventional technology, or all or some of the technical solutions may be implemented in a form of a software product. The computer program product is stored in a storage medium and includes several instructions for instructing a device (which may be a terminal device, a network device, a vehicle-mounted device, a router, a server, a robot, a chip, or a robot) to perform all or some of the steps of the method in embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A triggered transmission opportunity sharing mechanism-based communication method, applied to a station, wherein the method comprises:
receiving a first frame from an access point, wherein the first frame indicates that the access point allocates a first time period to the station; and
after replying with a second frame for the first frame, ignoring, within the first time period, a network allocation vector NAV set by the access point, until any one of the following conditions occurs:
a value of a transmission opportunity TXOP sharing mode in the first frame is equal to 1, and a transmission failure occurs on the station;
a value of a TXOP sharing mode in the first frame is equal to 1, and the station does not send a physical layer protocol data unit PPDU within a point coordination function interframe space PIFS since a third frame is sent, wherein the third frame does not require an immediate response from the access point; or
a value of a TXOP sharing mode in the first frame is equal to 1, and the station does not send a PPDU within a PIFS since an immediate response from the access point is received.

2. A triggered transmission opportunity sharing mechanism-based communication method, applied to a station, wherein the method comprises:
receiving a first frame from an access point, wherein the first frame indicates that the access point allocates a first time period to the station; and
after replying with a second frame for the first frame, ignoring a NAV set by the access point, until any one of the following conditions occurs:
the first time period ends;
a value of a TXOP sharing mode in the first frame is equal to 1, and a transmission failure occurs on the station;
a value of a TXOP sharing mode in the first frame is equal to 1, and the station does not send a PPDU within a PIFS since a third frame is sent, wherein the third frame does not require an immediate response from the access point; or
a value of a TXOP sharing mode in the first frame is equal to 1, and the station does not send a PPDU within a PIFS since an immediate response from the access point is received.

3. A triggered transmission opportunity sharing mechanism-based communication method, applied to a station, wherein the method comprises:
receiving a first frame from an access point, wherein the first frame indicates that the access point allocates a first time period to the station; and
after replying with a second frame for the first frame, ignoring, within the first time period, a NAV set by the access point, and skipping initiating channel contention within the first time period.

4. The method according to claim 3, wherein a first field in the first frame indicates that the station is allowed to only perform frame transmission with the associated AP within the allocated time.

5. The method according to claim 4, wherein the first field is a TXOP sharing mode subfield, and a value of the first field is equal to 1.

6. A communication apparatus, comprising:
a transceiver module, configured to receive a first frame from an access point, wherein the first frame indicates that the access point allocates a first time period to the station; and
a processing module, configured to: after the first frame is replied to with a second frame, ignore, within the first time period, a NAV set by the access point, until any one of the following conditions occurs:
a value of a TXOP sharing mode in the first frame is equal to 1, and a transmission failure occurs on the station;
a value of a TXOP sharing mode in the first frame is equal to 1, and the station does not send a PPDU within a PIFS since a third frame is sent, wherein the third frame does not require an immediate response from the access point; or
a value of a TXOP sharing mode in the first frame is equal to 1, and the station does not send a PPDU within a PIFS since an immediate response from the access point is received.

7. A communication apparatus, comprising:
a transceiver module, configured to receive a first frame from an access point, wherein the first frame indicates that the access point allocates a first time period to the station; and
a processing module, configured to: after the first frame is replied to with a second frame, ignore a NAV set by the access point, until any one of the following conditions occurs:
the first time period ends;
a value of a TXOP sharing mode in the first frame is equal to 1, and a transmission failure occurs on the station;
a value of a TXOP sharing mode in the first frame is equal to 1, and the station does not send a PPDU within a PIFS since a third frame is sent, wherein the third frame does not require an immediate response from the access point; or
a value of a TXOP sharing mode in the first frame is equal to 1, and the station does not send a PPDU within a PIFS since an immediate response from the access point is received.

8. A communication apparatus, comprising:
a transceiver module, configured to receive a first frame from an access point, wherein the first frame indicates that the access point allocates a first time period to the station; and
a processing module, configured to: after the first frame is replied to with a second frame, ignore, within the first time period, a NAV set by the access point, and skip initiating channel contention within the first time period.

9. The apparatus according to claim 8, wherein a first field in the first frame indicates that the station is allowed to only perform frame transmission with the associated AP within the allocated time.

10. The apparatus according to claim 9, wherein the first field is a TXOP sharing mode subfield, and a value of the first field is equal to 1.

11. A computer-readable storage medium, wherein the computer-readable storage medium stores a computer program; the computer program comprises program instructions; and when the program instructions are executed, a computer is enabled to perform the method according to claim 1 or 2; or when the program instructions are executed, a computer is enabled to perform the method according to any one of claims 3 to 5.

12. A communication apparatus, comprising a processor, wherein the processor is configured to: when executing instructions, enable the communication apparatus to perform the method according to claim 1 or 2, or enable the communication apparatus to perform the method according to any one of claims 3 to 5.

13. The apparatus according to claim 12, wherein the apparatus further comprises a memory, and the memory is configured to store the instructions.

14. A chip, wherein the chip comprises a processor and a communication interface, and the processor reads, through the communication interface, instructions stored in a memory, to perform the method according to claim 1 or 2 or the method according to any one of claims 3 to 5.
